Europäisches Patentamt

European Patent Office

Office européen des brevets

(19)

(11) Veröffentlichungsnummer: **0 193 719 B1**

# (12) EUROPÄISCHE PATENTSCHRIFT

(45) Veröffentlichungstag der Patentschrift: 20.02.91

(51) Int. Cl.5: **B29C 45/76**

(21) Anmeldenummer: 86100651.8

(22) Anmeldetag: 18.01.86

(54) Verfahren zur Kontrolle des Formfüllvorganges einer Kunststoff-Spritzgiesseinrichtung.

(30) Priorität: 08.03.85 AT 706/85

(43) Veröffentlichungstag der Anmeldung:
10.09.86 Patentblatt 86/37

(45) Bekanntmachung des Hinweises auf die
Patenterteilung:
20.02.91 Patentblatt 91/08

(84) Benannte Vertragsstaaten:
BE CH DE FR GB IT LI LU NL SE

(56) Entgegenhaltungen:
EP-A- 0 197 431
EP-A- 0 228 799
DE-A- 3 021 978
US-A- 3 859 400

PLAST-VERARBEITER, Band 34, Nr. 5, 1983,
Seiten 427-432; K. GISSING et al.:
"Überwachung des Spritzgiessprozesses
durch Messung viskositätsabhängiger Kengrössen"

PLAST-VERARBEITER, Band 34, Nr. 8, August
1983, Seiten 728-730, Speyer/Rhein, DE; G.
BURGHOFF: "Qualitätssicherung in Spritzgiessbetrieben mit Methoden der Prozessüberwachung"

KUNSTSTOFFE, Band 67, Nr. 4, April 1977,
Seiten 184-188; H.O. HELLMEYER et al.:
"Regelung des Maximaldrucks im Spritzgiesswerkzeug"

PLAST-VERARBEITER, Band 34, Nr. 10, 1983,
Seiten 1105-1108; A. LAMPL et al.: "Kontrolle
des Formfüllvorganges beim Spritzgiessen
mit Hilfe der Einspritzarbeit"

(73) Patentinhaber: Ludwig Engel KG
Ludwig-Engel-Strasse 1
A-4311 Schwertberg(AT)

(72) Erfinder: Lampl, Alfred
Schacherbergstrasse 2
A-4311 Schwertberg(AT)

(74) Vertreter: Hofinger, Engelbert et al
Torggler-Hofinger Wilhelm-Greil-Strasse 16
A-6020 Innsbruck(AT)

## Beschreibung

Die Erfindung bezieht sich auf ein Verfahren zur Kontrolle des Formfüllvorganges einer Kunststoff-Spritzgießeinrichtung, welcher eine Füllphase mit kontrollierter Geschwindigkeit des Spritzkolbens und eine Nachdruckphase mit kontrolliertem, am Spritzkolben anliegendem Hydraulikdruck aufweist, wobei die zwischen zwei Stellungen des Spritzkolbens geleistete Einspritzarbeit bestimmt wird, und die Umschaltung zwischen Füllphase und Nachdruckphase abhängig vom festgestellten Wert der Einspritzarbeit erfolgt.

Beispielsweise ist solch ein Verfahren aus PLASTverarbeiter 34, Jahrgang 1983, Nr. 10, Seite 1105 - 1108 bekannt, wo die Überwachung des Verhältnisses von Hydraulikdruck und Fließgeschwindigkeit insbesondere einen Vergleich der Viskositäten der Formmassen erlaubt. In der gleichen Arbeit wurde auch schon ein ziemlich umständliches Verfahren angegeben, um den der vollständigen Formfüllung entsprechenden Wert für die Einspritzarbeit zu bestimmen, dessen Erreichen dann das Signal für das Umschalten auf Nachdruck liefert. Eine Korrektur des Nachdruckes als Funktion der im gleichen Zyklus ermittelten Einspritzarbeit wird dabei als möglich bezeichnet.

Auch in DE-A-26 05 037 wurde bereits vorgeschlagen, durch Veränderung der Höhe des Nachdruckes Abweichungen von der gewünschten Qualität des Formlings zu vermeiden, welche ohne diese Änderung aufgrund im gleichen Zyklus erfolgter Messungen zu erwarten wären. Gemessen wird dabei vor allem ebenso wie beispielsweise gemäß GB-A-1 459 673 der Forminnendruck und der Zeitpunkt, zu welchem dieser ein Maximum erreicht, welcher die vollständige Füllung der Form anzeigt.

Die dauernde Überwachung des Forminnendrucks hat sich insbesondere bei der Herstellung von kompliziert gestalteten Formlingen als schwierig erwiesen. Auf jeden Fall stellt sie eine Maßnahme dar, welche die Formkosten erhöht. Der Erfindung liegt somit die Aufgabe zugrunde, aufgrund von Messungen, die bei der Herstellung eines Formlings an der Spritzgießeinrichtung selbst vorgenommen werden, eine Aussage über die zu erwartende Qualität des Formlings zu ermöglichen und damit einen Parameter zu liefern, welcher es ermöglicht, eine unerwünschte Qualitätsänderung durch Beeinflussung des Herstellungsvorganges zu unterbinden.

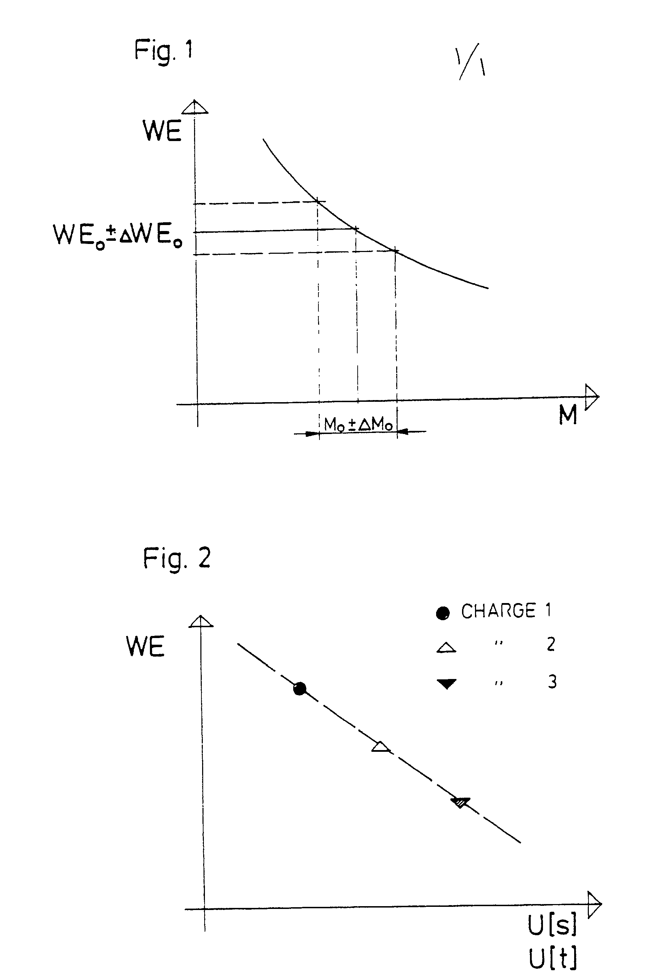

Bei der Lösung der gestellten Aufgabe hat sich zunächst herausgestellt, daß eine Beeinflussung der Höhe des Nachdruckes zu einem Zeitpunkt, wo der Forminnendruck sein Maximum bereits überschritten, die Form also ganz erfüllt ist, das Endergebnis nur mehr wenig beeinflußt. Überraschenderweise ergab sich jedoch eine Lösung, wenn zur Vermeidung von Schwankungen in der Masse der Formlinge aufgrund ungleichmäßiger Materialbeschaffenheit, in Abhängigkeit von der während der Füllphase festgestellten Einspritzarbeit der Umschaltpunkt zwischen Füllphase und Nachdruckphase so gewählt wird, daß er einem Punkt auf einer experimentell bestimmten Kurve entspricht (Fig. 2), welche für durch verschiedene Werte der Einspritzarbeit charakterisierte Materialqualitäten den Umschaltpunkt angibt, der zur gewünschten Masse führt.

Der Einfluß von Materialschwankungen läßt sich also erfindungsgemäß dadurch kompensieren, daß der Umschaltpunkt zwischen Füllphase und Nachdruckphase nur mehr angenähert dem Augenblick vollständiger Formfüllung gleichgesetzt wird, wogegen die Höhe des Nachdruckes unabhängig von der schwankenden Materialqualität gewählt wird. Die Begründung für diese Vorgangsweise ergibt sich aus folgender Überlegung: wie bereits bekannt ist, schwankt beispielsweise die Masse des Formlings in Abhängigkeit von der Viskosität des eingesetzten Materials, für welche die Einspritzarbeit WE zwischen zwei vorbestimmten Kolbenstellungen ein Maß bildet. Diese Erkenntnis ist bisher nur dazu ausgenützt worden, Formlinge automatisch als Ausschuß zu behandeln, bei welchen die im Einspritzzyklus festgestellte Abweichung der Einspritzarbeit vom Normalwert eine zu große Abweichung der Masse des Formlings vom Normalwert erwarten läßt.

Neu und überraschend war die Feststellung, daß durch Beeinflussung eines einzigen Parameters, nämlich des Umschaltpunktes zwischen Füllphase und Nachdruckphase, der Einlfuß aller Schwankungen in den Materialeigenschaften kompensiert werden kann, welche in den Wert für die Einspritzarbeit eingehen. Zunächst würde man hier an eine Temperaturänderung denken, um die Viskosität auf einen Normalwert zu bringen, doch sind Temperaturänderungen nur mit wesentlicher Verzögerung erreichbar und außerdem haben sie Rückwirkungen auf das ganze System. Eine an sich mögliche Änderung der Kolbengeschwindigkeit in der Füllphase wäre allenfalls in dem auf die Messungen der Einspritzarbeit folgenden Zyklus möglich. Die in der eingangs erwähnten Veröffentlichung vorgeschlagene Korrektur des Nachdruckes ist mit zunehmendem Fortschreiten der Nachdruckphase, also mit Annäherung an den Versiegelungspunkt, mehr und mehr unwirksam. Einen Ausweg bietet das erfindungsgemäß vorgeschlagene Abgehen von der theoretisch an sich gut begründeten Forderung (vgl. PLASTverarbeiter 34. Jahrgang 1983, Nr. 5, Seite 430), die Umschaltung auf den Nachdruck, also vom maschinenbedingten Fließen auf das werkzeugbedingte Fließen, exakt mit jenem Augenblick zusammenfallen zu lassen, in welchem die Form gerade gefüllt ist.

Die Beziehung zwischen dem Ausmaß der Verschiebung des Umschaltpunktes und der materialabhängigen Einspritzarbeit ist erfindungsgemäß derart festzulegen, daß für verschiedene, in ihren Eigenschaften geringfügig differierende Materialien der Umschaltpunkt so lange verschoben wird, bis die gewünschte Qualität des Formlings, insbesondere die gewünschte Masse oder die gewünschten Abmessungen, erhalten werden. Trägt man den zugehörigen Wert für die Einspritzarbeit in ein Diagramm ein, ergibt sich durch Interpolation jener Umschaltpunkt, der für ein noch unbekanntes Material zu wählen ist, für welches im ersten Teil des Einspritzzyklus die Einspritzarbeit bestimmt worden ist.

Einzelheiten der Erfindung werden anschließend anhand der Zeichnung erläutert, in welcher

Fig. 1 die an sich bekannte Beziehung zwischen Einspritzarbeit und Masse des Formlings darstellt,

Fig. 2 die Möglichkeit, bei wechselnder, durch die Einspritzarbeit charakterisierter Materialzusammensetzung durch Veränderung des Umschaltpunktes konstante Fertigteilqualität zu erzielen.

Die Rohstoffhersteller sind bestrebt, dem Verarbeiter Formmassen mit möglichst konstanten Rohstoffeigenschaften zu liefern. Zum Ausgleich von Chargenschwankungen werden die Polymerisationsprodukte verschiedener Chargen vermischt. Aber trotz der Bemühungen seitens der Rohstoffhersteller können Schwankungen in den Rohstoffeigenschaften auftreten, wenn beispielsweise die Rohstoffe aus verschiedenen Polymerisationsanlagen oder sogar von verschiedenen Produzenten stammen. Man beobachtet dann, daß aufgrund veränderter Molekulargewichtsverteilungen oder einem abweichenden Glasfasergehalt der Rohstoffe Spritzgießmaschinen trotz konstanter Verarbeitungsbedingungen dennoch Ausschuß produzieren.

Es ist bereits bekannt, daß sich Schwankungen in Aufbau oder Zusammensetzung des Ausgangsmaterials durch eine Beziehung gemäß Fig. 1 wiedergeben lassen. Die erzeugten Formlinge haben also nur dann die gewünschte Masse $M_o$, wenn die Einspritzarbeit einen zugehörigen Wert $WE_o$ annimmt. Bei Abweichungen der Einspritzarbeit von diesem Wert ändert sich die Masse des Formlings, weshalb die Messung der Einspritzarbeit dazu herangezogen werden kann, vorweg eine Annahme über die Qualität des Verfahrensproduktes zu machen und unter zu stark abweichender Einspritzarbeit entstandene Formlinge ohne weitere Prüfung auszuscheiden. Die Messung der Einspritzarbeit erfolgt dabei sinnvollerweise zwischen zwei Punkten, welche nicht den gesamten Schneckenweg beim Füllvorgang erfassen. Dadurch können Effekte ausgeschaltet werden, die lediglich mit der Beschleunigung der Schnecke am Anfang des Füllvorgans zusammenhängen, und andererseits besteht die Möglichkeit, den Umschaltzeitpunkt um ein gewünschtes Maß vorzuverlegen.

Wie aus Fig. 2 hervorgeht, kann für jede chargenweise schwankende Materialqualität, welche durch eine bestimmte Einspritzarbeit charakterisiert ist, durch Verändern des Zeitpunktes, in welchem auf den gegenüber dem Fülldruck niedrigeren Nachdruck umgeschaltet wird, ein vorgegebener Wert $M_o$ der Masse des Formlings erzwungen werden. Statt als Funktion der Zeit kann der Umschaltpunkt natürlich auch als Funktion der Kolbenstellung aufgefaßt werden, da sich der Schneckenkolben zu jedem Zeitpunkt an einer definierten Stelle befindet. Die auf diese Weise gewonnene Kurve gemäß Fig. 2 wird anschließend dazu verwendet, beim Spritzen mit Chargen zunächst unbekannter Zusammensetzung nach Feststellung der Einspritzarbeit noch im selben Zyklus den Umschaltpunkt so festzulegen, daß die gewünschte Masse des Formlings $M_o$ resultiert.

## Ansprüche

Verfahren zur Kontrolle des Formfüllvorganges einer Kunststoff-Spritzgießeinrichtung, welche eine Füllphase mit kontrollierter Geschwindigkeit des Spritzkolbens und eine Nachdruckphase mit kontrolliertem, am Spritzkolben anliegendem Hydraulikdruck aufweist, wobei die zwischen zwei Stellungen des Spritzkolbens geleistete Einspritzarbeit bestimmt wird, und die Umschaltung zwischen Füllphase und Nachdruckphase abhängig vom festgestellten Wert der Einspritzarbeit erfolgt, dadurch gekennzeichnet, daß zur Vermeidung von Schwankungen in der Masse der Formlinge aufgrund ungleichmäßiger Materialbeschaffenheit, in Abhängigkeit von der während der Füllphase festgestellten Einspritzarbeit der Umschaltpunkt zwischen Füllphase und Nachdruckphase so gewählt wird, daß er einem Punkt auf einer experimentell bestimmten Kurve entspricht welche für durch verschiedene Werte der Einspritzarbeit (WE) charakterisierte Materialqualitäten den Umschaltpunkt (U) angibt, der zur gewünschten Masse ($M_o$) führt.

## Claims

A method of controlling the mould filling procedure of a plastics material injection moulding apparatus, which comprises a filling phase with a controlled speed for the injection piston and a postpressure phase with a controlled hydraulic pressure applied to the injection piston, wherein the injection work done between two positions of the injection piston is determined, and switching over between the filling phase and the post-pressure phase is effected in dependence on the detected value of the injection work, characterised in that, to avoid fluctuations in the mass of the mouldings due to unevenness in the nature of the material, the switching-over point between the filling phase and the post-pressure phase is so selected in dependence on the injection work detected during the filling phase that that point corresponds to a point on an experimentally determined curve which specifies for material qualities characterised by different values in respect of the injection work (WE) the switching-over point (U) which leads to the desired mass ($M_o$).

## Revendications

Procédé de contrôle du processus de remplissage du moule d'un dispositif d'injection de matière plastique, qui présente une phase de remplissage à vitesse contrôlée du piston d'injection et une phase de compression postérieure avec une pression hydraulique appliquée au piston d'injection, le travail d'injection étant fourni entre deux positions du piston d'injection, et le basculement entre la phase de remplissage et la phase de compression postérieure dépend de la valeur constatée du travail d'injection, caractérisé en ce que pour éviter des variations de masse des pièces moulées en raison des irrégularités de matière, on choisit le point de basculement entre la phase de remplissage et la phase de compression postérieure en fonction du travail constaté pendant la phase de remplissage, de sorte qu'il corresponde à un point de la courbe déterminée expérimentalement, qui indique le point de basculement (U) pour les caractéristiques du matériau à différentes valeurs de travail d'injection (WE), qui conduit à la masse souhaitée ($M_o$).

Fig. 1

1/1

WE

$WE_o \pm \Delta WE_o$

$M_o \pm \Delta M_o$

M

Fig. 2

WE

● CHARGE 1
△    "    2
▼    "    3

U[s]
U[t]